# EUROPÄISCHE PATENTSCHRIFT

(11) **EP 1 267 115 B1**
(45) Veröffentlichungstag und Bekanntmachung des Hinweises auf die Patenterteilung: **17.12.2003**
(21) Anmeldenummer: 02000652.4
(22) Anmeldetag: 11.01.2002
(51) Int. Cl.: F16L 55/115, F16J 13/02

(54) **Endseitiger Verschluss eines Rohres**
Endcap closure for a pipe
Obturateur d'extrémité d'un tuyau

(30) Priorität: 30.05.2001 DE 10126180
(43) Veröffentlichungstag der Anmeldung: 18.12.2002
(73) Patentinhaber: Dockweiler Aktiengesellschaft, 19306 Neustadt-Glewe (DE)
(72) Erfinder: Fiebig, Klaus-Dieter, 21465 Reinbek (DE)
(74) Vertreter: Patentanwälte Hauck, Graalfs, Wehnert, Döring, Siemons, Schildberg

(56) Entgegenhaltungen:
- BE-A- 464 308
- DE-C- 867 188
- DE-U- 29 511 930
- GB-A- 1 104 174

## Beschreibung

Die Erfindung betrifft einen endseitigen Verschluss eines Rohres, insbesondere zum hochgasdichten Verschließen des Rohres, nach dem Patentanspruch 1.

Bei der Verwendung von Rohren zum Leiten von Medien, beispielsweise Gas, ist es immer wieder erforderlich, ein Rohrende abzuschließen. Ein solcher Rohrabschluss kann beispielsweise dadurch erforderlich werden, dass eine Rohrleitung zeitweise nicht weitergeführt werden soll. Insbesondere bei Rohrleitungssystemen, die in mehreren Stufen ausgebaut werden, ergibt sich häufig die Notwendigkeit, Rohrleitungen, die für einen weiteren Ausbau des Rohrleitungssystems vorgesehen sind, zunächst zu verschließen. Aber auch bei der Systemherstellung kann ein zeitweiliger Abschluss zweckmäßig sein, beispielsweise um Verschmutzung zu vermeiden.

Zum Verschließen der Rohrleitungssysteme ist es bekannt, eine Kappe auf das Ende des Rohres zu schweißen. Nachteilig an einem solchen Abschluss des Rohres ist, dass beim Trennen der Kappe vom Rohrende Metallspäne und Verunreinigungen auftreten. Solche Verunreinigungen erfordern insbesondere bei Rohren, die in Halbleiterfabriken, pharmazeutischen Anlagen oder anderen Einsatzorten mit gesteigerten Anforderungen an die Reinheit verwendet werden, eine aufwändige Vorbereitung vor einer erneuten Benutzung der Rohrleitung. Oftmals ist vor einer erneuten Inbetriebnahme der Rohrleitung ein zeit- und kostenintensives Durchspülen der Rohrleitung erforderlich.

Es wurde auch schon vorgeschlagen, eine Vorrichtung zum endseitigen Verschließen eines Rohres bereitzustellen, die einfach herstellbar ist, das Rohr dicht abschließt und sich einfach und rückstandsfrei von diesem entfernen lässt. Hierfür ist ein Stutzenelement aus Metall mit einem Ende an dem zu verschließenden Rohr verschweißt und dessen anderes Ende für ein Orbitalschweißen mit einem anschließenden Rohr ausgebildet ist. Die Außenseite des Stutzenelements weist eine zumindest axial zum anderen Ende hin festlegbare Schrägfläche auf. Ein auf das andere Ende des Stutzenelements setzbares Verschlusselement weist eine gegen die Stirnseite des anderen Rohrendes anlegbare Dichtfläche und eine umlaufende äußere zweite Schrägfläche auf. Eine solche Vorrichtung ist zum hochgasdichten Verschließen eines Rohrendes geeignet. Das Stutzenelement wird an dem zu verschließenden Rohr beispielsweise durch Anschweißen befestigt. Die Schelle, welche das Stutzenelement umfasst, presst in ihrem befestigten Zustand das Verschlusselement auf das Stutzenelement. Vorteilhaft an der Erfindung ist, dass nach einem Entfernen des Verschlusselements an dem befestigten Stutzenelement weitere Rohre angeschlossen werden können. Das Stutzenelement ist dabei derart ausgebildet, dass durch Orbitalschweißen ein weiteres Rohr an dem Stutzenelement befestigt werden kann. Das Entfernen der Schelle und des Verschlusselements erfolgt einfach und ohne ein Eintreten von Schmutz oder Verunreinigungen in das Stutzenelement oder das Rohr.

Der Erfindung liegt die Aufgabe zugrunde, einen endseitigen Verschluss für ein Rohr zu schaffen, der noch weiter vereinfacht und besonders leicht zu handhaben ist.

Diese Aufgabe wird durch die Merkmale des Patentanspruchs 1 gelöst.

Bei dem erfindungsgemäßen endseitigen Verschluss ist an der Außenseite des Stutzenelements, das mit dem zu verschließenden Rohr verschweißt ist. Sein Ende ist für das Orbitalschweißen ausgebildet und mit einem hoch gasdichten Verschluss versehen. Dazu kann ein Ringflansch am Stutzenelement geformt sein, der in Umfangsabständen achsparallele Gewindebohrungen aufweist. Ferner ist ein Verschlusselement vorgesehen, das kappenförmig ausgebildet ist mit einem Decken- und einem ringförmigen Wandabschnitt und der auf das freie Ende des Stutzenelements aufsetzbar ist. Hierbei entspricht der Innendurchmesser des Wandabschnitts des kappenförmigen Verschlusselements etwa dem Außendurchmesser des Rohrstutzens. Das freie Ende des Rohrstutzens legt sich dabei gegen die Innenfläche des Deckenabschnitts dichtend an, so dass eine metallische Dichtung hergestellt ist.

Der Wandabschnitt des kappenförmigen Verschlusselements weist eine Reihe von im Umfangsabstand angeordneten achsparallel verlaufenden Durchbohrungen auf, die mit den Gewindebohrungen im Ringflansch ausrichtbar sind. Schließlich sind Schrauben vorgesehen, die vom Deckenabschnitt des Verschlusselements her in die Durchbohrungen einführbar und in die Gewindebohrungen des Flansches einschraubbar sind, um den Kappenabschnitt fest gegen das freie Ende des Rohrstutzens anzupressen. Auf diese Weise wird ein dichter Verschluss am freien Ende des Rohrstutzens erhalten, der auch bei sehr hohen Drücken oder Druckdifferenzen wirksam ist. In jedem Fall wird ein hochgasdichtes Verschließen des Rohres, das ungefähr eine Dichtigkeit von etwa 10⁻⁹ 1 pro Jahr gewährleistet. Für das Stutzenelement und das Verschlusselement dienen insbesondere Legierungen aus V4A-Stahl vorgesehen. Auch die Verwendung von Silber ist vorteilhaft.

Der Ringflansch des Stutzenelements ist vorzugsweise rechteckig im Querschnitt. Für die Wirksamkeit der erfindungsgemäßen Anordnung ist dies jedoch nicht von Belang.

Nach einer anderen Ausgestaltung der Erfindung enden die Durchbohrungen in äußeren Taschen des Deckenabschnitts, welche den Kopf der Schrauben aufnehmen. Dadurch ist sichergestellt, dass die Schrauben nicht über die Außenkontur des Verschlusselements hinausstehen und möglicherweise eine Verletzungsgefahr bedeuten können. Die versenkte Anordnung der Schraubenköpfe ist auch dann gegeben, wenn die Ringkante zwischen Wandabschnitt und Deckenabschnitt mit einer ausgeprägten Fase versehen ist.

Um die Dichtung noch zu verbessern, kann nach einer Ausgestaltung der Erfindung ein flacher metallischer Dichtring, vorzugsweise aus Nickel, zwischen dem anderen Ende des Stutzenelements und der Innenseite des Verschlusselements angeordnet werden. Zu diesem Zweck kann nach einer weiteren Ausgestaltung der Erfindung die Innenseite des Deckenabschnitts nahe dem Wandabschnitt mit einer umlaufenden Schulter versehen werden, gegen welche sich der Dichtring anlegt.

Um die Zugänglichkeit durch ein Werkzeug zu verbessern, haben die Köpfe der Schrauben vorzugsweise einen Innensechskant.

Die Erfindung wird nachfolgend anhand von Zeichnungen näher erläutert.
- Fig. 1: zeigt in Seitenansicht ein Stutzenelement im Schnitt nach der Erfindung.
- Fig. 2: zeigt im Schnitt ein Verschlusselement nach der Erfindung.
- Fig. 3: zeigt eine Einzelheit des Verschlusselements nach Fig. 2.

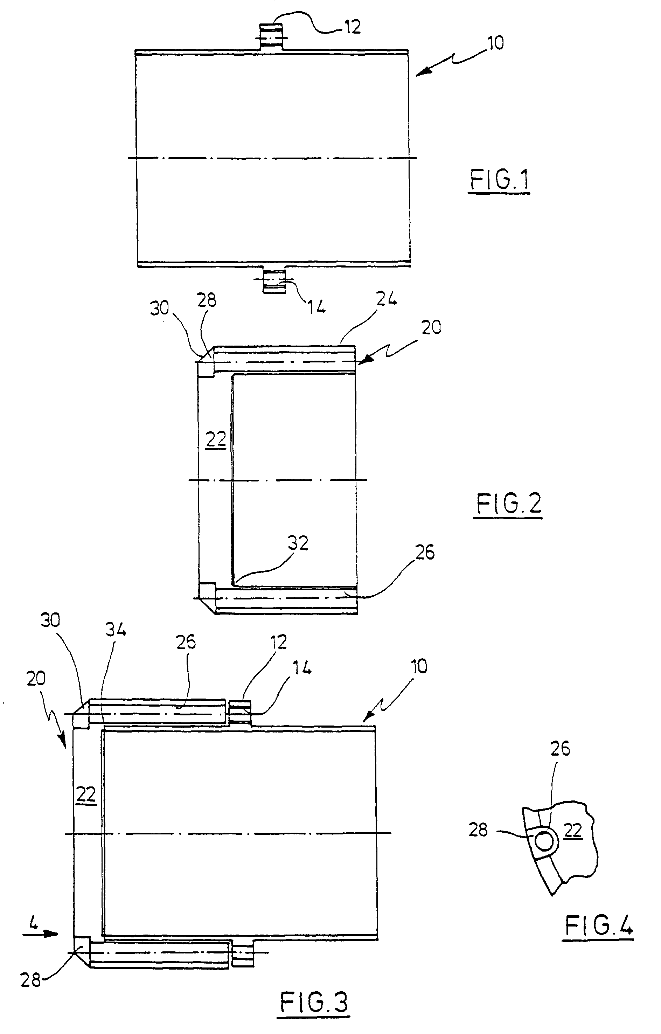

Ein in Fig. 1 dargestelltes Stutzenelement 10 ist rohrförmig und von gleichmäßigem Durchmesser und gleichmäßiger Dicke über seine Länge. Es besteht zum Beispiel aus V4A-Stahl. An seinen Umfang ist ein ringförmiger Flansch 12 einteilig angeformt, der im Querschnitt rechteckig ist. Der Flansch weist in Umfangsabständen Gewindedurchbohrungen 14 auf.

Das eine Ende des Stutzenelements 10 wird mit einem Rohr von gleichen Abmessungen verschweißt, vorzugsweise durch Orbitalschweißen, sodass keinerlei Rückstände verbleiben. Im Übrigen ist das andere Ende des Rohrs ebenfalls so ausgeführt, dass es für das Orbitalschweißen verwendbar ist. Das Stutzenelement ist bezüglich seiner Mittenebene symmetrisch, wodurch es gleich ist, mit welchem Ende es an das nicht gezeigte Rohr angeschweißt ist.

Ein Verschlusselement 20 in Fig. 2 ist kappenförmig und weist einen Deckenabschnitt 22 auf sowie einen ringartigen Wandabschnitt 24, der innen und außen zylindrisch ist. Der Innendurchmesser des Wandabschnitts 24 entspricht dem Außendurchmesser des Stutzenelements 10.

Das Verschlusselement 20 weist im Umfangsabstand eine Reihe von achsparallelen Durchbohrungen 26 auf, die zum Deckenabschnitt 12 hin in Taschen 28 enden. Die Durchbohrungen 26 nehmen lange Schrauben auf (nicht gezeigt) mit einem Kopf, der in den Taschen 28 zu liegen kommt, wobei der Kopf weitgehend von den Taschen 28 aufgenommen ist, so dass der Kopf nicht unnötig hervorsteht. Dies trotz einer Fase 30, durch welche die äußere Ringkante des Deckenabschnitts 22 angeschrägt ist. Die Durchbohrungen 26 können zu den Gewindebohrungen 14 ausgerichtet werden.

In Fig. 3 ist zu erkennen, wie das Verschlusselement 20 auf den linken Teil des Stutzenelements 10 aufgeschoben ist. Zwischen dem freien Ende des Stutzenelements 10 und einer ringförmigen Schulter 32 an der Innenseite des Deckenabschnitts nahe dem Wandabschnitt 24 ist ein dünnes flaches Dichtungselement 34 aus z.B. Nickel angeordnet. Durch die Durchbohrungen 26 werden, wie beschrieben, die Schrauben hindurchgeführt und mit ihrem Gewinde in die Gewindebohrungen 14 eingeschraubt, sodass eine Zugkraft zwischen Verschlusselement 20 und zugekehrtem Ende des Stutzenelements 10 aufgebracht wird, durch welche die Teile dichtend gegeneinander gezogen werden zur Bildung eines hochgasdichten Abschlusses.

Ist nun erwünscht, an das nicht gezeigte Rohr, mit dem das Stutzenelement 10 verschweißt ist, ein weiteres Rohr zu Verlängerungszwecken anzubringen, wird durch Lösen der nicht gezeigten Schrauben das Verschlusselement 20 entfernt, und das weitere Rohr kann nun an das freiliegende Ende des Stutzenelements 10 im Orbitalschweißverfahren angeschweißt werden.

## Patentansprüche

1. Endseitiger Verschluss eines Rohres mit den folgenden Merkmalen:
- ein Stutzenelement (10) aus Metall, das mit einem Ende mit dem zu verschließenden Rohr verschweißt ist, dessen anderes Ende für ein Orbitalverschweißen mit einem anschließenden Rohr ausgebildet ist und das an der Außenseite mit einem Ringflansch (12) geformt ist, der in Umfangsabständen achsparallele Gewindebohrungen (14) aufweist
- ein auf das andere Ende des Stutzenelements (10) aufsetzbares kappenförmiges Verschlusselement (20) mit einem Deckenabschnitt (22) und einem ringförmigen Wandabschnitt (24), wobei die Innenseite des Deckenabschnitts (22) dichtend gegen die Stirnseite des anderen Rohrendes dichtend anlegbar ist und wobei der Wandabschnitt (24) achsparallele Durchbohrungen (26) aufweist, die mit den Gewindebohrungen (14) ausrichtbar sind und
- einen Kopf aufweisende Schrauben, die von dem Deckenabschnitt (22) her durch die Durchbohrungen (26) steckbar und in die Gewindebohrungen (14) einschraubbar sind, wobei der Kopf der Schrauben sich gegen eine Widerlagerfläche des Deckenabschnitts (22) anlegt, um die Innenseite des Deckenabschnitts gegen die Stirnseite des anderen Endes zu pressen, wenn die Schrauben angezogen werden.

2. Endseitiger Verschluss nach Anspruch 1, **dadurch gekennzeichnet, daß** die Leckrate kleiner ist als 10⁻⁹ mill bar.1.sec. bzw. 10⁻⁹ 1 pro Jahr.

3. Endseitiger Verschluss nach Anspruch 1 oder 2, **dadurch gekennzeichnet, dass** der Flansch (12) im Querschnitt rechteckig ist.

4. Endseitiger Verschluss nach Anspruch 1, **dadurch gekennzeichnet, dass** die Durchbohrungen (26) in äußeren Taschen (28) des Deckenabschnitts (22) enden, welche den Kopf der Schrauben aufnehmen.

5. Endseitiger Verschluss nach Anspruch 1, **dadurch gekennzeichnet, dass** ein flacher metallischer Dichtring (34), vorzugsweise aus Nickel, zwischen dem anderen Ende des Stutzenelements (10) und dem Deckenabschnitt (22) angeordnet ist.

6. Endseitiger Verschluss nach Anspruch 5, **dadurch gekennzeichnet, dass** die Innenseite des Deckenabschnitts (22) nahe dem Wandabschnitt (24) eine umlaufende Schulter (32) aufweist, gegen welche der Dichtring (34) anliegt.

7. Endseitiger Verschluss nach Anspruch 1, **dadurch gekennzeichnet, dass** der Gewindeabschnitt der Schrauben nur im freien Endbereich vorgesehen ist.

8. Endseitiger Verschluss nach Anspruch 1, **dadurch gekennzeichnet, dass** der Schraubenkopf einen Innensechskant aufweist.

## Claims

1. Endside closure of a pipe with the following characteristics:
- a connecting element (10) from metal, which is welded together with the pipe to be closed at its one end, its other end being formed for orbital welding with a joining pipe and being formed with an annular flange (12) on the outer side, which has threaded bores (14) in perimeter distances parallel to the axis.
- a cap-shaped closure element (20) placeable upon the other end of the connecting element (10), with a ceiling portion (22) and a ring-shaped wall portion (24), the inner side of the ceiling portion (22) being sealingly puttable against the front side of the other pipe end to fit sealingly, and the wall portion (24) being provided with bores parallel to the axis (26), which are alignable with the threaded bores (14) , and
- screws with a head, which are pluggable through the bores (26) fromout the ceiling portion (22) and which are screwable into the threaded bores (14), the head of the screws supporting itself against an abuttment plane of the ceiling portion (22), in order to press the inner side of the ceiling portion against the front side of the other end, when the screws are screwed down.

2. Endside closure according to claim 1, **characterised in that** the leaking rate is smaller than 10⁻⁹ mbar per second or 10⁻⁹ liter per annum, respectively.

3. Endside closure according to claim 1 or 2, **characterised in that** the flange (12) is rectangular in its cross section.

4. Endside closure according to claim 1, **characterised in that** the bores (26) end in outer pockets (28) of the ceiling portion (22), which accommodate the heads of the screws.

5. Endside closure according to claim 1, **characterised in that** a flat metallic sealing ring (34), preferably from nickel, is disposed between the other end of the connecting element (10) and the ceiling portion (22).

6. Endside closure according to claim 5, **characterised in that** the inner side of the ceiling portion (22) has a revolving shoulder (32) near to the wall portion (24), against which the sealing ring (34) sits closely.

7. Endside closure according to claim 1, **characterised in that** the thread portion of the screws is provided only in the free end portion.

8. Endside closure according to claim 1, **characterised in that** the screw head has a hexagon socket.

## Revendications

1. Obturateur d'extrémité d'un tuyau, avec les caractéristiques suivants :
- un élément de rallonge (10) en métal, qui est soudé avec l'une extrémité avec le tuyau qu'il faut obturer, dont l'autre extrémité est formée pour un soudage orbital avec un tuyau suivant, et qui est formé avec un collerette annulaire (12) au coté extérieur, ladite collerette comportant, dans des espacements sur la circonférence, des perçages filetés (14) parallèles à l'axe;
- un élément d'obturation en forme de casquette (20), déposable sur l'autre extrémité de l'élément de rallonge (10), avec une partie de plafond (22) et une partie de paroi annulaire (24), le coté intérieur de la partie de plafond (22) étant appuyable en étanchéité contre le coté du front de l'autre extrémité du tuyau, et la partie de paroi (24) comportant des perçages (26) parallèles à l'axe, qui sont orientables vers les perçages filetés (14). des vis ayant une tête, qui sont enfichables en partant de la partie de plafond (22) à travers les perçages (26) et qui sont vissables dans les perçages filetés (14), la tête des vis s'appuyant contre une aire de butée de la partie de plafond (22), pour presser le coté intérieur de la partie de plafond contre le coté du front de l'autre extrémité quand les vis sont serrées.

2. Obturateur d'extrémité selon la revendication 1, **caractérisé en ce que** le taux de fuite est inférieur à 10⁻⁹ millibar/sec ou 10⁻⁹ litres/an, respectivement.

3. Obturateur d'extrémité selon la revendication 1 ou 2, **caractérisé en ce que** la collerette (12) est rectangulaire en coupe transversale.

4. Obturateur d'extrémité selon la revendication 1, **caractérisé en ce que** les perçages (26) finissent dans des poches extérieures (28) de la partie de plafond (22), qui logent la tête des vis.

5. Obturateur d'extrémité selon la revendication 1, **caractérisé en ce que** un anneau d'étanchéité métallique plat (34), en préférence de nickel, est disposé entre l'autre extrémité de l'élément de rallonge (10) et la partie de plafond (22).

6. Obturateur d'extrémité selon la revendication 5, **caractérisé en ce que** le coté intérieur de la partie de plafond (22) présente une épaule circulante (32) proche à la partie de paroi (24), contre laquelle l'anneau d'étanchéité (34) s'appuie.

7. Obturateur d'extrémité selon la revendication 1, **caractérisé en ce que** la partie de filet des vis est prévue seulement dans la région d'extrémité libre.

8. Obturateur d'extrémité selon la revendication 1, **caractérisé en ce que** la tête de vis présente six pans creux.
